# FASCICULE DE BREVET EUROPEEN

(11) **EP 3 816 458 B1**
(45) Date de publication et mention de la délivrance du brevet: **27.04.2022**
(21) Numéro de dépôt: 20192923.9
(22) Date de dépôt: 26.08.2020
(51) Int. Cl.: F16B 5/06, F24S 25/634, F16B 2/24

(54) **AGRAFE DE MAINTIEN DE DEUX ELEMENTS PLANS**
KLAMMER ZUM HALTEN VON ZWEI FLACHEN ELEMENTEN
CLIP FOR HOLDING TWO FLAT ELEMENTS

(30) Priorité: 28.10.2019 FR 1912022
(43) Date de publication de la demande: 05.05.2021
(73) Titulaire: A. Raymond et Cie, 38000 Grenoble (FR)
(72) Inventeur: TURLOT, Emmanuel, 38000 GRENOBLE (FR); LEGALL, Antoine, 38600 FONTAINE (FR); CHEVRIER, Jean-Baptiste, 38660 SAINT VINCENT DE MERCLUZE (FR)
(74) Mandataire: IP Trust

(56) Documents cités:
- EP-A1- 3 550 158
- WO-A1-2018/024951
- WO-A1-2019/143701

## Description

### DOMAINE DE L'INVENTION

La présente invention concerne une agrafe de maintien de deux éléments plans. Elle trouve notamment son application pour fixer le cadre d'un module photovoltaïque sur un rail d'une structure porteuse.

### ARRIERE PLAN TECHNOLOGIQUE DE L'INVENTION

On connaît des documents US2013102165, DE202008013005, US6279207 une agrafe métallique permettant de maintenir deux éléments plans assemblés entre eux. Néanmoins ces agrafes ne permettent pas l'assemblage de deux éléments plans mis en contact au niveau de leur faces principales. Cette configuration peut être souhaitable selon le type d'installation, notamment dans le cas de la fixation d'un cadre d'un module photovoltaïque sur un rail d'une structure porteuse.

On connaît une agrafe permettant ce type d'assemblage du document DE102014007971. Néanmoins cette agrafe présente l'inconvénient d'avoir une faible résistance mécanique aux sollicitations externes, par exemple sous l'effet d'un vent fort tendant à désolidariser les deux éléments assemblés entre eux.

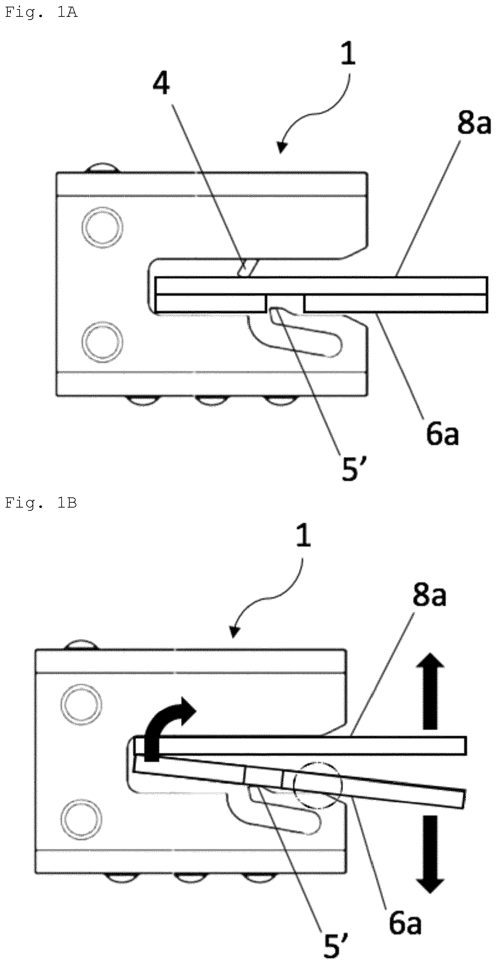

On connaît également du document WO2018024951 une agrafe permettant le type d'assemblage plan voulu et ayant une meilleure résistance mécanique aux sollicitations externes que celle de la solution précitée. Une telle agrafe est représentée sur la figure 1A. Cette agrafe 1 possède deux parois latérales munies chacune d'une rainure débouchante pour accueillir les deux éléments plans 8a, 6a à assembler. Cette agrafe permet d'accueillir des éléments d'épaisseurs variables grâce à la présence d'une languette flexible 4 disposée sur une paroi supérieure et/ou inférieure et configurée pour appliquer une pression sur les deux éléments plans 8a, 6a afin de les maintenir plaqués contre un bord de la rainure. Un ergot 5', porté par un bras flexible et débouchant dans la rainure, est destiné à s'insérer dans une ouverture formée dans l'un des deux éléments pour le retenir assemblé à l'agrafe 1.

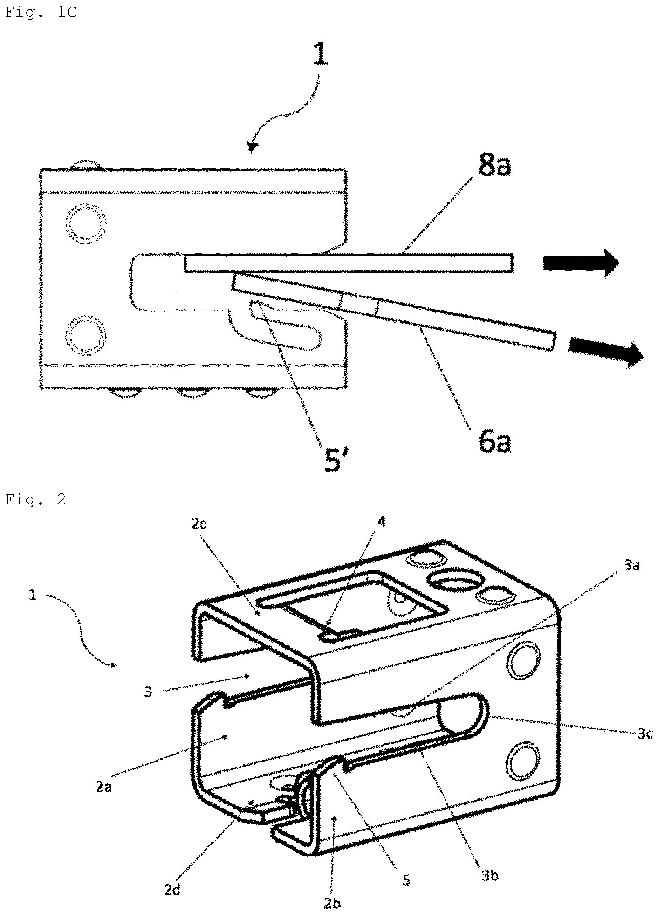

Des études ont révélé que des sollicitations extrêmes pouvaient conduire à sortir l'ergot de l'ouverture et permettre à l'élément de glisser hors de la rainure. Les figures 1B et 1C illustrent ce phénomène. Dans la figure 1B, des sollicitions externes sont exercées sur les deux éléments plans 8a, 6a pour les écarter l'un de l'autre. L'élément plan 6a muni de l'ouverture prend appui sur le bras flexible en amont de l'ergot 5' (zone localisée par un cercle sur la figure 1B) et pivote autour de ce point d'appui. Ce pivotement entraîne la sortie de l'ergot 5' de l'ouverture ainsi que la compression de la languette flexible 4 par l'autre élément plan 8a en le plaquant contre la languette flexible 4. Les deux éléments plans 8a, 6a, n'étant retenus ni par l'ergot 5' ni par la languette flexible 4, peuvent alors sortir de la rainure, comme cela est illustré sur la figure 1C.

### OBJET DE L'INVENTION

Un but de l'invention est de proposer une agrafe permettant le maintien de deux éléments plans assemblés l'un à l'autre au niveau de leur face principale et remédiant aux inconvénients précités.

### BREVE DESCRIPTION DE L'INVENTION

En vue de la réalisation de ce but, l'objet de l'invention propose une agrafe pour maintenir deux éléments plans assemblés l'un à l'autre au niveau de leur face principale, l'agrafe comprenant :
- au moins deux parois latérales munies chacune d'une rainure débouchante destinée à accueillir les deux éléments plans, chaque rainure étant délimitée par un contour présentant un segment supérieur, un segment inférieur faisant face au segment supérieur, chaque segment présentant une extrémité de jonction et une extrémité libre, et un segment de jonction reliant les extrémités de jonction des deux segments ;
- une paroi supérieure munie d'une languette flexible configurée pour appliquer une pression sur les deux éléments plans lorsque ceux-ci sont logés dans les rainures et pour les plaquer contre le segment inférieur du contour de la rainure ;
l'agrafe étant caractérisée en ce que:
- l'extrémité libre du segment inférieur est muni d'une griffe faisant saillie dans la rainure ;
- le segment supérieur est incliné d'un angle compris entre 1° et 5° par rapport au segment inférieur pour éloigner l'une de l'autre les extrémités libres du segment inférieur et du segment supérieur du contour de la rainure.

Selon d'autres caractéristiques avantageuses et non limitatives de l'invention, prises seules ou selon toute combinaison techniquement réalisable :
- le segment de jonction du contour de la rainure présente une forme en portion de cercle ;
- la griffe comprend une pointe, un flanc interne faisant face au segment de jonction et un flanc externe, le flanc interne formant un angle compris entre 45° et 90°, préférentiellement 80°, avec le segment inférieur du contour ;
- le flanc externe est composé d'un plan incliné pour guider l'insertion des éléments plans dans la rainure et d'un plateau disposé entre la pointe et le plan incliné.

Selon un autre aspect, l'objet de l'invention propose un assemblage comprenant :
- une agrafe telle que précédemment énoncée ;
- un premier élément plan et un deuxième élément plan disposés et maintenus assemblés l'un à l'autre au niveau de leur face principale dans les rainures de l'agrafe ; le deuxième élément plan étant muni d'au moins une ouverture accueillant intégralement chaque griffe de l'agrafe.

Selon d'autres caractéristiques avantageuses et non limitatives de l'invention, prises seules ou selon toute combinaison techniquement réalisable :
- le deuxième élément plan présente une épaisseur et la hauteur de la griffe est inférieure ou égale à l'épaisseur du deuxième élément plan.

### BREVE DESCRIPTION DES FIGURES

D'autres caractéristiques et avantages de l'invention ressortiront de la description détaillée de l'invention qui va suivre en référence aux figures annexées sur lesquels :
- Les figures 1A à 1C représentent une vue de profil d'une agrafe conforme à l'état de la technique ;
- La figure 2 représente une vue d'ensemble d'une agrafe conforme à l'invention ;
- La figure 3 représente le profil du segment inférieur de la rainure de l'agrafe ;
- La figure 4 représente une section du deuxième élément plan ;
- La figure 5 représente une vue schématique d'un exemple d'utilisation d'une agrafe conforme à l'invention ;
- La figure 6 représente une autre vue de l'exemple d'utilisation de la figure 5.

### DESCRIPTION DETAILLEE DE L'INVENTION

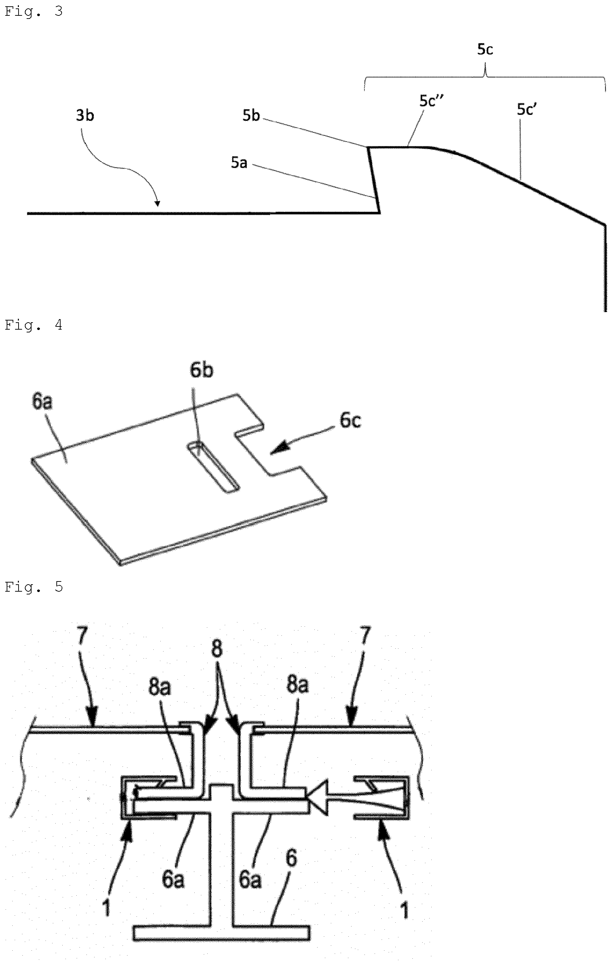

La figure 2 représente une vue d'ensemble d'une agrafe 1 conforme à l'invention pour maintenir un premier élément plan 8a et un deuxième élément plan 6a assemblés l'un à l'autre au niveau de leur face principale. Le deuxième élément plan 6a est muni d'une ouverture 6b pour retenir l'agrafe 1 comme cela est représenté sur la figure 4.

L'agrafe 1 est constituée de deux parois latérales 2a, 2b et de deux parois transverses 2c, 2d reliant les deux parois latérales 2a, 2b entre elles. Les quatre parois 2a, 2b, 2c, 2d définissent un pavé droit, c'est-à-dire un volume fermé (sur au moins quatre de ses faces) de section rectangulaire ou carré.

Les parois latérales 2a, 2b de l'agrafe 1 sont chacune munie d'une rainure 3 débouchante d'un même côté de l'agrafe 1. Ces rainures 3 sont configurées pour permettre d'insérer l'agrafe 1 sur les deux éléments plans 8a, 6a assemblés l'un à l'autre et les maintenir l'un contre l'autre. A ce titre, la hauteur des rainures 3 est ajustée pour correspondre sensiblement à l'épaisseur cumulée des deux éléments plans 8a et 6a. Les rainures 3 peuvent présenter une profondeur qui s'étend sur la moitié au moins de la longueur d'une paroi latérale 2a, 2b. Toutefois, et de préférence, on veillera à ne pas leur donner une profondeur trop importante qui conduirait à fragiliser la pièce lorsque les efforts appliqués sur les éléments plans 8a, 6a tendent à les écarter l'un de l'autre.

Chaque rainure 3 est délimitée par un contour présentant un segment supérieur 3a, un segment inférieur 3b faisant face au segment supérieur 3a, et un segment de jonction 3c. Les segments supérieur 3a et inférieur 3b présentent chacun une extrémité de jonction et une extrémité libre. Les extrémités libres de ces segments définissent l'ouverture par l'intermédiaire de laquelle les éléments plans 8a, 6b pénètrent dans la rainure 3. Le segment de jonction 3c relie les extrémités de jonction des deux segments 3a, 3b.

Avantageusement, le segment de jonction 3c présente une forme en portion de cercle afin d'améliorer la résistance à la fatigue de l'agrafe 1.

L'une des parois transverses 2c, 2d de l'agrafe 1 est munie d'une languette flexible 4 formée par découpe et par pliage d'une portion de cette paroi. Par convention, on désignera par paroi supérieure 2c la paroi transverse comprenant la languette flexible, et par paroi inférieure 2d la paroi transverse opposée.

La languette flexible 4 est configurée pour appliquer une pression sur les éléments plans 8a et 6a lorsque ceux-ci sont logés dans les rainures 3 pour les plaquer contre le segment inférieur 3b du contour de la rainure 3 et les maintenir assemblés l'un à l'autre. A cet effet, la languette flexible 4 est orientée vers l'intérieur de l'agrafe 1 et dans le sens opposé à l'insertion de l'agrafe 1 sur les deux éléments plans 8a, 6a. Avantageusement, l'extrémité libre de la languette flexible 4 comprend un bord tranchant afin d'améliorer l'accroche entre le premier élément plan 8a et l'agrafe 1 en créant une griffure.

La languette flexible 4 permet d'assembler l'agrafe 1 sur des éléments plans 8a, 6a d'épaisseur cumulée variable. En plaquant le premier élément plan 8a contre le deuxième élément plan 6a, la languette flexible 4 limite leur mouvement, selon une direction perpendiculaire à leur face principale, dans la rainure 3 malgré la présence d'un espace libre entre le premier élément plan 8a et le segment supérieur 3a du contour de la rainure 3.

L'extrémité libre du segment inférieur 3b est munie d'une griffe 5 faisant saillie dans la rainure 3. La griffe 5 est destinée à se loger intégralement dans l'ouverture 6b du deuxième élément plan 6a. La griffe 5 a pour fonction de retenir le deuxième élément plan 6a assemblé à l'agrafe 1 en venant en butée contre le bord de l'ouverture 6b si le deuxième élément plan 6a tend à sortir de l'agrafe 1.

Bien qu'ici une seule ouverture 6b soit représentée pour accueillir simultanément les griffes 5 de chaque rainure 3, il est également que le deuxième élément plan 6a soit muni de deux ouvertures 6b pour accueillir respectivement les deux griffes 5.

En référence à la figure 3, la griffe 5 comprend, une pointe 5b, un flanc interne 5a et un flanc externe 5c, la pointe 5b formant la jonction entre les deux flancs 5a et 5c.

Le flanc interne 5a fait face au segment de jonction 3c et relie la pointe 5b de la griffe 5 au segment inférieur 3b de la rainure 3. Avantageusement, le flanc interne 5a forme un angle compris entre 45° et 90°, préférentiellement 80°, avec le segment inférieur 3b du contour de la rainure 3. Grâce à son inclinaison, le flanc interne 5a tend à ramener le deuxième élément plan 6a contre le segment inférieur 3b, lorsque des sollicitions externes l'en écartent, et permet ainsi de limiter le risque que la griffe 5 se désengage de l'ouverture 6b. La pointe 5b permet d'améliorer l'accroche entre l'agrafe 1 et le deuxième élément plan 6a en pouvant créer une griffure sur le bord de l'ouverture 6b.

Le flanc externe 5c relie la pointe 5b de la griffe 5 à l'extrémité libre du segment inférieur 3b. Le flanc externe 5c est composé d'un plan incliné 5c' et d'un plateau 5c'' disposé entre la pointe 5b et le plan incliné 5c'. Le plan incliné 5c' permet de guider l'insertion de l'agrafe 1 sur les éléments plans 8a, 6a pour les faire glisser dans la rainure 3. Dans le cas où le deuxième élément plan 6a arriverait à se désengager de la griffe 5, le plateau 5c'' limite le risque que cet élément plan 6a soit guidé hors de la rainure 3 par le plan incliné 5c'.

La hauteur de la griffe 5 est inférieure ou égale à l'épaisseur du deuxième élément plan 6a afin de permettre le plaquage du premier élément plan 8a contre le deuxième élément plan 6a.

On notera que la position de la griffe 5 à l'extrémité libre du segment inférieur 3b et le fait que l'ouverture 6b accueille intégralement la griffe 5, réduisent les risques de désassemblage de l'agrafe 1 des éléments plans 8a, 6a. Ces caractéristiques permettent de faire coïncider le point d'appui entre le deuxième élément plan 6a et le segment inférieur 3b à l'intersection du segment inférieur 3b avec le flanc interne 5a de la griffe 5. Aucun point d'appui ne peut se former en amont de la griffe 5, entre le deuxième élément 6a et le segment inférieur 3b. On évite de la sorte les risques de glissement observés dans le cas d'une agrafe de l'état de la technique.

Le segment supérieur 3a et le segment inférieur 3b de la rainure 3 présentent entre eux un angle d'inclinaison non nul. Cette inclinaison est choisie pour conserver une distance entre les extrémités libres des deux segments 3a, 3b similaire à celle entre leurs extrémités de jonction malgré la présence de la griffe 5. Dit autrement, on veut conserver un espacement au niveau de l'ouverture de la rainure 3 similaire à celui présent au fond de la rainure 3.

L'angle d'inclinaison est avantageusement compris entre 1° et 5°, préférentiellement 3°.

La figure 5 représente un exemple schématisé d'utilisation d'une agrafe 1 selon l'invention. Sur ce schéma, deux modules photovoltaïques 7 sont respectivement placés sur un rail 6 d'une structure porteuse. Ces modules 7 comprennent chacun un cadre 8 dont une aile 8a forme un premier élément plan 8a qui repose sur un deuxième élément plan 6a du rail 6. Sur le côté gauche de la figure 5, une première agrafe 1 conforme à l'invention a été insérée sur les deux éléments plans 6a, 8a afin de les maintenir assemblés solidement l'un à l'autre. Sur la partie droite de ce schéma, on a représenté symboliquement le mouvement d'insertion de l'agrafe 1 sur les deux éléments plans 6a, 8a afin de solidariser le second panneau photovoltaïque 7 à la structure porteuse.

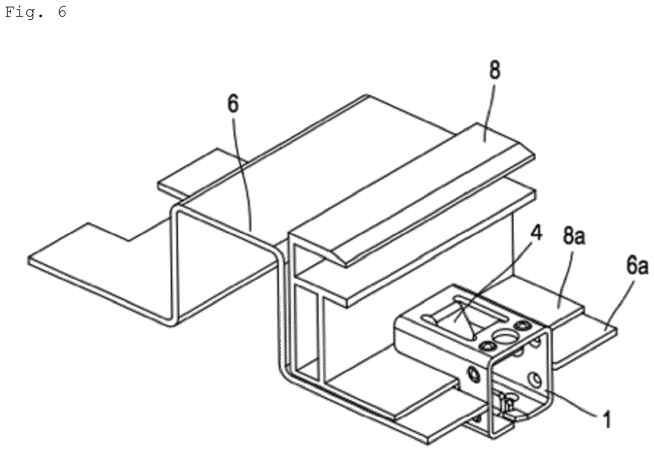

La figure 6 représente une autre vue de cet assemblage. On retrouve sur cette figure le deuxième élément plan 6a du rail 6 et le premier élément plan 8a d'un cadre 8 d'un module photovoltaïque. Comme cela est bien visible sur la figure 4, on remarque que le deuxième élément plan 6a peut comprendre une encoche 6c permettant de faire pénétrer l'agrafe 1 plus profondément sur cet élément.

Avantageusement, l'agrafe 1 est en métal et réalisée d'une seule pièce ce qui lui permet d'être particulièrement robuste.

Lorsque les éléments plans 8a, 6a sont métalliques, il est avantageux de choisir le métal constituant l'agrafe 1 pour qu'il présente une dureté supérieure à celui du métal des éléments plans 8a, 6a. Il peut s'agir d'un acier ou d'un acier inoxydable. La griffure qui se forme alors sur l'un au moins des éléments plans 8a, 6a lors de l'insertion de l'agrafe 1, grâce à la languette flexible 4 et/ou la griffe 5, contribue à maintenir l'agrafe 1 en position et à établir un contact électrique de qualité. Ce contact électrique peut être mis à profit pour propager une masse commune à l'ensemble des éléments métalliques en contact.

Bien entendu l'invention n'est pas limitée au mode de mise en œuvre décrit et on peut y apporter des variantes de réalisation sans sortir du cadre de l'invention tel que défini par les revendications.

En particulier, il n'est pas nécessaire que l'agrafe 1 soit définie par quatre parois définissant un volume fermé de section rectangulaire ou carrée. On peut envisager une agrafe 1 dont la section pourrait présenter une tout autre forme, dans la mesure où l'agrafe comporte des parois latérales, opposées l'une à l'autre, permettant d'y disposer les rainures 3 ainsi qu'une paroi transverse, reliant les parois latérales entre elle, comprenant une languette flexible.

## Revendications

1. Agrafe (1) pour maintenir deux éléments plans (8a, 6a) assemblés l'un à l'autre au niveau de leur face principale, l'agrafe (1) comprenant :
- au moins deux parois latérales (2a, 2b) munies chacune d'une rainure (3) débouchante destinée à accueillir les deux éléments plans (8a, 6a), chaque rainure (3) étant délimitée par un contour présentant un segment supérieur (3a), un segment inférieur (3b) faisant face au segment supérieur (3a), chaque segment (3a, 3b) présentant une extrémité de jonction et une extrémité libre, et un segment de jonction (3c) reliant les extrémités de jonction des deux segments (3a, 3b) ;
- une paroi supérieure (2c) munie d'une languette flexible (4) configurée pour appliquer une pression sur les deux éléments plans (8a, 6a) lorsque ceux-ci sont logés dans les rainures (3) et pour les plaquer contre le segment inférieur (3b) du contour de la rainure (3);
l'agrafe (1) étant **caractérisée en ce que**:
- l'extrémité libre du segment inférieur (3b) est munie d'une griffe (5) faisant saillie dans la rainure (3) ;
- le segment supérieur (3a) est incliné d'un angle compris entre 1° et 5° par rapport au segment inférieur (3b) pour éloigner l'une de l'autre les extrémités libres du segment inférieur (3b) et du segment supérieur (3a) du contour de la rainure (3).

2. Agrafe (1) selon la revendication précédente dans laquelle le segment de jonction (3c) du contour de la rainure (3) présente une forme en portion de cercle.

3. Agrafe (1) selon l'une des revendications précédentes dans laquelle la griffe (5) comprend une pointe (5b), un flanc interne (5a) faisant face au segment de jonction (3c) et un flanc externe (5c), le flanc interne (5a) formant un angle compris entre 45° et 90°, préférentiellement 80°, avec le segment inférieur (3b) du contour.

4. Agrafe (1) selon la revendication précédente dans laquelle le flanc externe (5c) est composé d'un plan incliné (5c') pour guider l'insertion des éléments plans (8a, 6a) dans la rainure (3) et d'un plateau (5c") disposé entre la pointe (5b) et le plan incliné (5c').

5. Assemblage comprenant :
- une agrafe (1) conforme à l'une des revendications 1 à 4 ;
- un premier élément plan (8a) et un deuxième élément plan (6a) disposés et maintenus assemblés l'un à l'autre au niveau de leur face principale dans les rainures (3) de l'agrafe (1) ; le deuxième élément plan (6a) étant muni d'au moins une ouverture (6b) accueillant intégralement chaque griffe (5) de l'agrafe (1).

6. Assemblage selon la revendication précédente dans lequel le deuxième élément plan (6a) présente une épaisseur, et la hauteur de la griffe (5) est inférieure ou égale à l'épaisseur du deuxième élément plan (6a).

## Patentansprüche

1. Klemme (1) zum Halten von zwei Flächenelementen (8a, 6a), die an ihrer Hauptseite miteinander angeordnet sind, wobei die Klemme (1) Folgendes umfasst:
- wenigstens zwei Seitenwände (2a, 2b), die jeweils mit einer durchgehenden Nut (3) versehen sind, die dazu bestimmt ist, die zwei Flächenelemente (8a, 6a) aufzunehmen, wobei jede Nut (3) durch eine Kontur begrenzt ist, die ein oberes Segment (3a), ein unteres Segment (3b), das dem oberen Segment (3a) zugewandt ist, wobei jedes Segment (3a, 3b) ein Anschlussende und ein freies Ende aufweist, und ein Anschlusssegment (3c) aufweist, das die Anschlussenden der zwei Segmente (3a, 3b) verbindet;
- eine obere Wand (2c), die mit einer flexiblen Zunge (4) versehen ist, die zum Ausüben von Druck auf die zwei Flächenelemente (8a, 6a), wenn diese in den Nuten (3) untergebracht sind, und zum Pressen dieser gegen das untere Segment (3b) der Kontur der Nut (3) konfiguriert ist;
wobei die Klemme (1) **dadurch gekennzeichnet ist, dass**:
- das freie Ende des unteren Segments (3b) mit einer Klaue (5) versehen ist, die in die Nut (3) hineinragt;
- das obere Segment (3a) in einem Winkel zwischen 1° und 5° in Bezug auf das untere Segment (3b) geneigt ist, um die freien Enden des unteren Segments (3b) und des oberen Segments (3a) der Kontur der Nut (3) voneinander wegzubewegen.

2. Klemme (1) nach dem vorhergehenden Anspruch, wobei das Anschlusssegment (3c) der Kontur der Nut (3) eine Form eines Kreisabschnitts aufweist.

3. Klemme (1) nach einem der vorhergehenden Ansprüche, wobei die Klaue (5) eine Spitze (5b), einen dem Anschlusssegment (3c) zugewandten Innenflansch (5a) und einen Außenflansch (5c) umfasst, wobei der Innenflansch (5a) einen Winkel zwischen 45° und 90°, vorzugsweise 80°, mit dem unteren Segment (3b) der Kontur ausbildet.

4. Klemme (1) nach dem vorhergehenden Anspruch, wobei der Außenflansch (5c) aus einer geneigten Ebene (5c') zum Führen des Einführens der Flächenelemente (8a, 6a) in die Nut (3) und aus einer Platte (5c") besteht, die zwischen der Spitze (5b) und der geneigten Ebene (5c') eingerichtet ist.

5. Anordnung, die Folgendes umfasst:
- eine Klemme (1) nach einem der Ansprüche 1 bis 4;
- ein erstes Flächenelement (8a) und ein zweites Flächenelement (6a), die an ihrer Hauptseite in den Nuten (3) der Klemme (1) eingerichtet sind und angeordnet gehalten werden; wobei das zweite Flächenelement (6a) mit wenigstens einer Öffnung (6b) versehen ist, die jede Klaue (5) der Klemme (1) vollständig aufnimmt.

6. Anordnung nach dem vorhergehenden Anspruch, wobei das zweite Flächenelement (6a) eine Dicke aufweist und die Höhe der Klaue (5) kleiner als oder gleich der Dicke des zweiten Flächenelements (6a) ist.

## Claims

1. Clip (1) for holding two planar elements (8a, 6a) which are joined together at their main face, the clip (1) comprising:
- at least two side walls (2a, 2b) each provided with an open groove (3) which is intended to accommodate the two planar elements (8a, 6a), each groove (3) being defined by a contour having an upper segment (3a) and a lower segment (3b) which faces the upper segment (3a), each segment (3a, 3b) having a connection end and a free end, and a connection segment (3c) connecting the connection ends of the two segments (3a, 3b);
- an upper wall (2c) provided with a flexible tab (4) which is configured to apply pressure on the two planar elements (8a, 6a) when said elements are housed in the grooves (3) and to clamp said elements against the lower segment (3b) of the contour of the groove (3);
the clip (1) being **characterized in that**:
- the free end of the lower segment (3b) is provided with a claw (5) which projects into the groove (3);
- the upper segment (3a) is inclined at an angle of between 1° and 5° with respect to the lower segment (3b) in order to keep the free ends of the lower segment (3b) away from the free ends of the upper segment (3a) of the contour of the groove (3).

2. Clip (1) according to the preceding claim, wherein the connection segment (3c) of the contour of the groove (3) is in the shape of a portion of a circle.

3. Clip (1) according to either of the preceding claims, wherein the claw (5) comprises a tip (5b), an internal flank (5a) which faces the connection segment (3c) and an external flank (5c), the internal flank (5a) forming an angle of between 45° and 90°, preferably 80°, with the lower segment (3b) of the contour.

4. Clip (1) according to the preceding claim, wherein the external flank (5c) consists of an inclined plane (5c') for guiding the insertion of the planar elements (8a, 6a) into the groove (3) and of a planar portion (5c") which is arranged between the tip (5b) and the inclined plane (5c').

5. Assembly comprising:
- a clip (1) according to any of claims 1 to 4;
- a first planar element (8a) and a second planar element (6a) which are arranged and held joined together at their main face in the grooves (3) of the clip (1); the second planar element (6a) being provided with at least one opening (6b) which fully accommodates each claw (5) of the clip (1).

6. Assembly according to the preceding claim, wherein the second planar element (6a) has a thickness, and the height of the claw (5) is less than or equal to the thickness of the second planar element (6a).
